# EUROPEAN PATENT APPLICATION

(11) **EP 2 003 881 A2**
(43) Date of publication of application: **17.12.2008**
(21) Application number: 08010615.6
(22) Date of filing: 11.06.2008
(51) Int. Cl.: H04N 5/232

(54) **Image blur correction unit, image blur correction device, imaging device and portable device**

(30) Priority: 15.06.2007 JP 2007159269
(71) Applicant: Fujinon Corporation, Saitama-shi, Saitama (JP)
(72) Inventor: Sekino, Shizuo, Saitama-shi Saitama (JP); Yoshida, Hideo, Saitama-shi Saitama (JP)
(74) Representative: Klunker . Schmitt-Nilson . Hirsch

(57) **Abstract**

An image blur correcting unit comprises: a holding module that holds a lens and a driving mechanism that drives the holding module so as to correct blur of an image formed by catching light of an object to be imaged arriving via the lens; a cover that covers the holding module and the driving mechanism to define an outline of the image blur correcting unit.

## Description

### Background of the Invention

### 1. Field of the Invention

The present invention relates to an image blur correcting unit that can be preferably used as a hand vibration correcting mechanism for an imaging device such as a digital camera or a portable telephone having a camera, an image blur correcting device having the image blur correcting unit, a imaging device having the image blur correcting device and a portable device having the imaging device.

### 2. Description of the Related Art

Usually, in the digital camera or the like, various kinds of hand vibration correcting mechanisms are employed to suppress the turbulence of an imaged image due to the hand vibration of a user (see JP-A-7-274056, JP-A-2005-326807 and Japanese Patent No. 2612371).

Some of the above-described hand vibration correcting mechanisms employ a system referred to as what is called a gimbal mechanism so that a holding module on which an imaging lens is held freely rotates in a pitching direction and a yawing direction.

However, in the case of what is called a gimbal mechanism disclosed in the JP-A-7-274056, since rotary joints that freely rotate need to be arranged at four positions in the upper, lower, right and left parts of the holding module, the hand vibration correcting mechanism is apt to be enlarged at any cost. Further, when the hand vibration correcting mechanism tries to be forcedly miniaturized, bearing parts of the rotary joints inconveniently become fragile.

Thus, Japanese patent applications relating to a driving structure, such as Japanese Patent Application No. 2006-269712, Japanese Patent Application No. 2006-269713, Japanese patent Application No. 2006-269714 and Japanese Patent Application No. 2006-269715 were filed in which an axis point as one point on the outer periphery of a holding module is supported so as to freely swing and the holding module is driven respectively through a first driving point and a second driving point separated in a first direction and a second direction different from each other from the axis point on the outer periphery of the holding module. Further, an improvement is added to these applications to propose a technique for the purpose of improving a position detecting accuracy of the holding module when the holding module swings as an image blur correcting unit of Japanese Patent Application No. 2007-035341. When the driving structures proposed by these applications are realized, the miniaturization of the image blur correcting unit is realized, so that the image blur correcting unit can be mounted on a portable device.

Here, an operation of the image blur correcting unit will be briefly described.

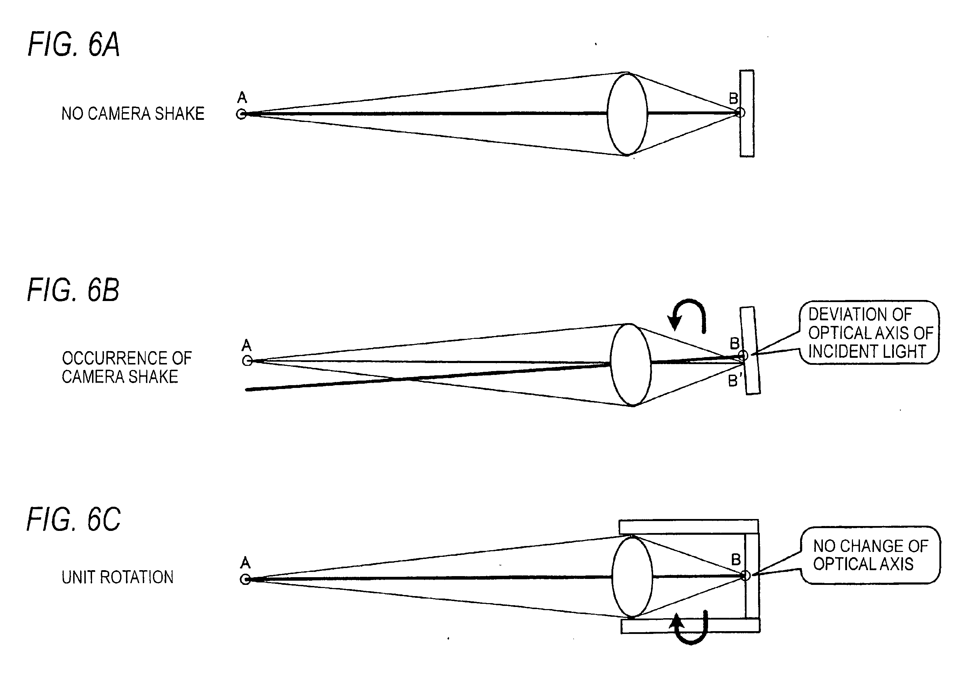

Figs. 6A to 6C are diagrams for explaining the operation of the image blur correcting unit.

Fig. 6A and Fig. 6B show what inconvenience occurs in a positional relation between a lens and a sensor when a blur arises. Fig. 6C shows how the blur is corrected by the image blur correcting unit including the lens and the sensor.

As shown in Fig. 6A, when the camera shake does not occur, an optical axis of the lens corresponds to an optical axis of a light receiving surface (a sensor surface) of the sensor so that the light of an object to be imaged forms an image on a proper position. On the contrary, when the camera shake occurs, as shown in Fig. 6B, the lens and the sensor surface rotate in the direction shown by an arrow mark so that the optical axis of the lens deviates from the optical axis of the sensor surface and the light of the object to be imaged does not form an image on the proper position.

Thus, when the image blur correcting unit is mounted on the portable device and a hand vibration arises during an imaging operation, as shown in Fig. 6C, the image blur correcting unit including the lens and the sensor is allowed to carry out an operation like a gyro. Thus, even when an imaging device rotates, the image blur correcting unit rotates in an opposite direction so that the light of the object to be imaged always forms the image on the proper position of the sensor surface. In such a way, when the image blur correcting unit is mounted on the portable device, even when the portable device is rotated by the imaging operation, the position of the image blur correcting unit is constantly maintained in a position immediately before the imaging operation. Thus, a preferable imaging operation is carried out.

Recently, the portable device is requested to be more miniaturized and thinned and various kinds of electronic parts are mounted on the thinner and more miniaturized portable device except the above-described image blur correcting unit. In such a portable device, since what is called a pack design is employed, the image blur correcting unit is mounted in a small unoccupied space of other many mounting parts without a gap. At this time, a mounting de sign is realized on the basis of an outline dimension of the image blur correcting unit to mount the image blur correcting unit in the body of the portable device with high density.

However, when the mounting design is employed with reference to the outline dimension of the image blur correcting unit to mount the image blur correcting unit on the portable device, the swinging holding module is mounted under a state that the holding module is exposed. Thus, there is a fear that a most swinging part occasionally excessively swing to come into contact with the inner wall of the body of the portable device and damage the inner wall of the body of the portable device. Further, there is a possibility that when the most swinging part frequently comes into contact with the inner part of the body of the portable device, the image blur correcting unit is broken.

### Summary of the Invention

By considering the above-described circumstances, it is an object of the present invention to provide an image blur correcting unit that does not damage an inner wall of the body of a portable device and assuredly operates even when the image blur correcting unit is mounted in the body of the compact and thin portable device, an image blur correcting device having the image blur correcting unit, an imaging device having the image blur correcting device and the portable device having the imaging device.

In order to achieve the above-described obj ect, an image blur correcting unit of the present invention comprises: a holding module that holds a lens; a driving mechanism that drives the holding module so as to correct blur of an image formed by catching light of an object to be imaged arriving via the lens; a cover that covers the holding module and the driving mechanism to define an outline of the image blur correcting unit.

According to the image blur correcting unit of the present invention, the outline of the image blur correcting unit is defined by the cover with which the holding module and the driving mechanism are respectively covered. Therefore, the holding module is not exposed to a surface to prevent the holding module from coming into contact with the inner wall of the body of the portable device. Thus, since the outline including a swinging range when the image blur correcting unit operates is defined by the cover, when the image blur correcting unit is simply mounted in the body of the portable device, then, the image blur correcting unit assuredly operates.

Further, the image blur correcting unit may further comprise a support member that supports the holding module so as to freely swing in a universal direction on an axis point as one point on an outer periphery of the holding module, wherein the driving mechanism comprises first and second driving mechanisms that drive the holding module respectively through a first driving point and a second driving point separated in a first direction and a second direction different from each other from the axis point on the outer periphery of the holding module, in which the first driving mechanism rotates, through the first driving point, the holding module on a first axis connecting the axis point to the second driving point, and the second driving mechanism rotates, through the second driving point, the holding module on a second axis connecting the axis point to the first driving point, wherein the cover covers the holding module and the first and second driving mechanisms, and further covers the support member to define the outline of the image blur correcting unit.

In the image blur correcting unit, the outline of the image blur correcting unit is defined by the cover with which the holding module, the support member and the two driving mechanisms are respectively covered. Therefore, the holding module is not exposed to a surface to prevent the holding module from coming into contact with the inner wall of the body of the portable device. Thus, since the outline including a swinging range when the image blur correcting unit operates is defined by the cover, when the image blur correcting unit is simply mounted in the body of the portable device, then, the image blur correcting unit assuredly operates.

The cover is preferably provided with a cushioning member that mitigates a shock caused by contact of the holding module with the cover due to swing of the holding module.

The dimension of the cover is desired to be reduced as much as possible so that the cover can be mounted on a compact and thin portable device. Thus, in the image blur correcting unit, the dimension of the cover is determined so that even when the holding module swings to a maximum level under a normal using state, the holding module does not come into contact with the cover. However, during a maximum swinging operation of a swing part, when a drop shock or the like is further added so that the swinging operation of an unexpected level arises, the swing part may occasionally come into contact with the cover. Thus, there is a fear that the swing part is broken owing to the contact with the cover due to the swinging operation.

Thus, the cover is preferably provided with a cushioning member that mitigates a shock caused by contact of the holding module with the cover due to swing of the holding module.

Further, the cover more preferably has an electromagnetic shield function.

As described above, since the pack design is employed in the mounting design of the inner part of the portable device, communication parts such as an antenna that applies an electromagnetic interference action to other electronic parts may be possibly mounted adjacently to the image blur correcting unit. Thus, there is a fear that the image blur correcting unit malfunctions due to an electromagnetic interference from the communication parts such as the antenna, or conversely, noise appears in the communication parts such as the antenna due to the electromagnetic interference from the magnetic parts of the image blur correcting unit. The cover may preferably have the electromagnetic shield function so as to meet such a case.

If the above-described invention is applied to Japanese Patent Application No. 2007-035341, further effects can be obtained.

Namely, in the image blur correcting unit, the first driving mechanism preferably comprises: a first arm that supports the first driving point so as to freely rotate; a first coil that is held by the first arm and receives action of a magnetic force and supply of an electric current to generate a driving force in a direction of an optical axis and to allow the first arm to drive the first driving point in the direction of the optical axis; a first magnet that is held by the support member to exert the magnetic force on the first coil and expands horizontally relative to the optical axis; and a first guide member that is fixed to the support member and guides the first arm so that a first working point of the first arm for applying the driving force to the first driving point moves in the direction of the optical axis, and the second driving mechanism comprises: a second arm that supports the second driving point so as to freely rotate; a second coil that is held by the second arm and receives action of a magnetic force and supply of an electric current to generate a driving force in a direction of an optical axis and to allow the second arm to drive the second driving point in the direction of the optical axis; a second magnet that is held by the support member to exert the magnetic force on the second coil and expands horizontally relative to the optical axis; and a second guide member that is fixed to the support member and guides the second arm so that a second working point of the second arm for applying the driving force to the second driving point moves in the direction of the optical axis.

The image blur correcting unit preferably further comprises: a first sensor that is supported by the first arm to detect change of the magnetic force received from the first magnet due to movement of the first arm in the direction of the optical axis when the first arm drives the first driving point; and a second sensor that is supported by the second arm to detect change of the magnetic force received from the second magnet due to movement of the second arm in the direction of the optical axis when the second arm drives the second driving point.

In the image blur correcting unit, it is preferred that the holding module holds the lens and also holds an image sensor which catches the light of the object to be imaged to generate an image signal.

Further, in the image blur correcting unit, it is preferred that the first driving point and the second driving point are respectively formed at positions where a line segment connecting the first driving point to the axis point intersects with each other a line segment connecting the second driving point to the axis point substantially at an angle of 90 °.

Further, in the image blur correcting unit, the holding module preferably comprises a spherical protruding part in the axis point, and the support member preferably comprises in its support part a spherical recessed surface that receives the protruding part.

Further, in the image blur correcting unit, it is preferred that the holding module comprises spherical protruding parts respectively in the first driving point and the second driving point, and the first arm and the second arm comprise in the first working point and the second working point respectively spherical recessed parts that receive the protruding parts respectively provided in the first driving point and the second driving point so that the first arm and the second arm apply the driving force to the protruding parts respectively through the recessed parts.

In order to achieve the above-described object, an image blur correcting device of the present invention comprises any of the above-described image blur correcting unit; a shake detecting part that detects a blur; and a shake control part that allows the first and second driving mechanisms to rotate and drive the holding module in accordance with the detected result of the shake detecting part.

Further, in order to achieve the above-described object, an imaging device of the present invention comprises the above-described image blur correcting device, wherein the holding module holds the lens and further holds the image sensor which catches an object to be imaged to generate an image signal in which a blur is reduced by the operation of the image blur correcting device.

A portable device of the present invention for achieving the above-described object comprises the above-described imaging device.

### Brief Description of the Drawings

Figs. 1A and 1B are perspective views of an external appearance of a portable telephone to which one embodiment of the present invention is applied;
Fig. 2 is a block diagram showing an inner structure of the portable telephone 100 shown in Fig. 1;
Fig. 3 is an exploded perspective view of an image blur correcting unit;
Fig. 4 is a view showing a state after the image blur correcting unit is assembled by members respectively shown in the exploded perspective view in Fig. 3;
Figs. 5A to 5C are diagrams for explaining the operation of the image blur correcting unit of the embodiment; and
Figs. 6A to 6C are diagrams for explaining the operation of an image blur correcting unit proposed by the applicant of the present invention.

### Detailed Description of the Invention

Now, an embodiment of the present invention will be described below by referring to the drawing.

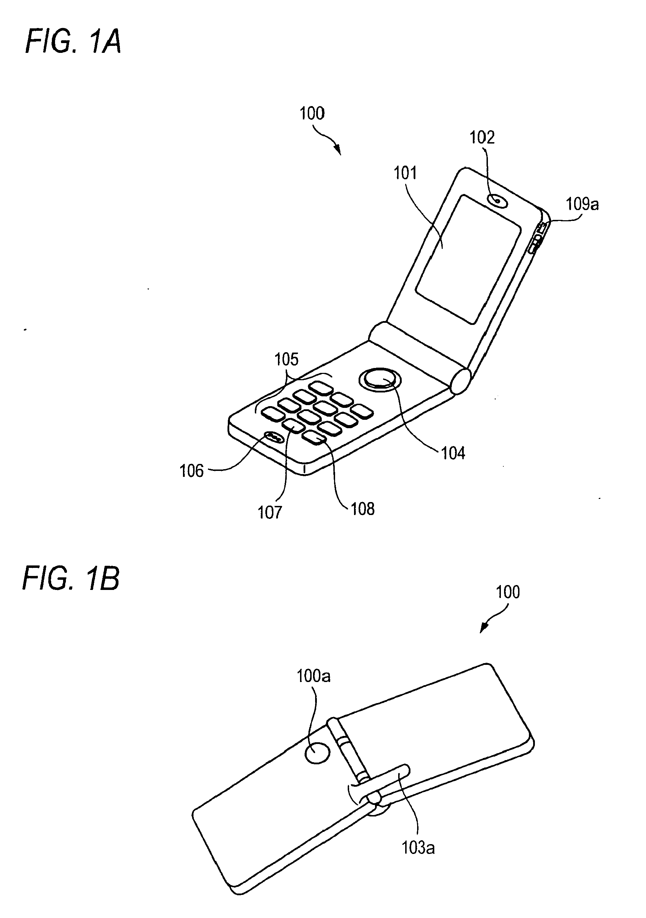

Figs. 1A and 1B are perspective views of an external appearance of a portable telephone to which an embodiment of the present invention is applied.

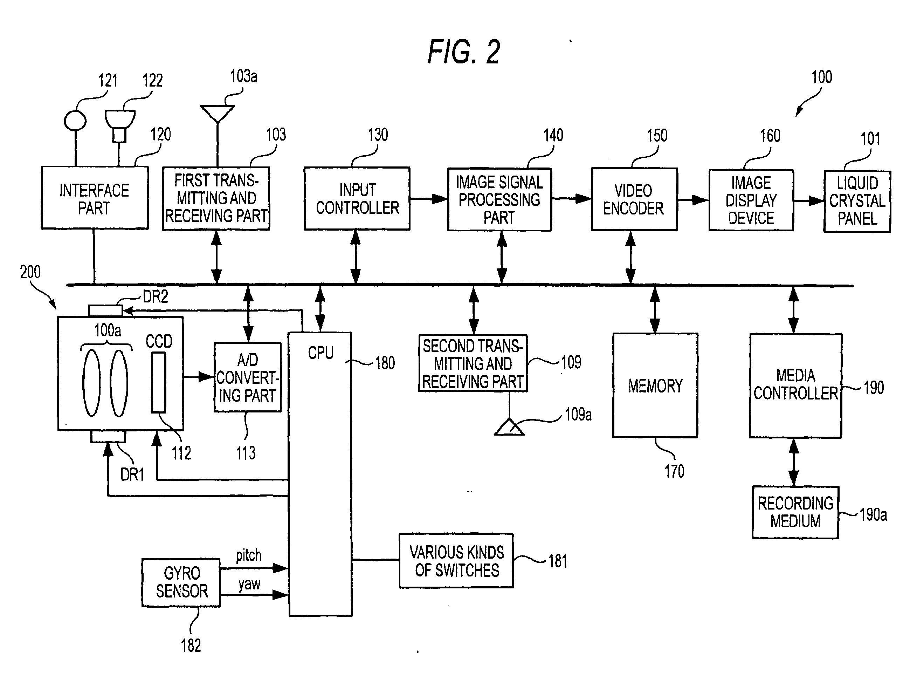

Fig. 1A shows a front view of a portable telephone 100. On a front surface of the portable telephone 100, a liquid crystal panel 101 on which a menu screen or an imaged image is displayed, an ear piece 102 having a speaker (see Fig. 2) provided in an inner part to transmit an audio emitted from the speaker to a space, a selecting button 104 used for selecting various kinds of functions or used as a shutter button during an imaging operation, a push button 105 for inputting a telephone number, a mouth piece 106 having a microphone (see Fig. 2) provided in an inner part to transmit voice to the microphone, a determining button 107 for determining the telephone number inputted by a user, a power button 108 and a second antenna 109a for transmitting and receiving an image or address information by a radio communication for a short distance without using an exchange office.

Fig. 1B shows a rear view of the portable telephone 100. On the rear surface of the portable telephone 100, a first antenna 103a for transmitting and receiving data such as an audio or a mail through the exchange office and an imaging lens 100a are arranged. This imaging lens 100a is held by a below-described image blur correcting unit.

Fig. 2 is a block diagram showing an inner structure of the portable telephone 100 illustrated in Figs. 1A and 1B.

The portable telephone 100 includes therein an image blur correcting unit 200, an A/D (Analog/Digital) converting part 113, the microphone 121, the speaker 122, an interface part 120, the first antenna 103a, a first transmitting and receiving part 103, an input controller 130, an image signal processing part 140, a video encoder 150, an image display device 160, the second antenna 109a, a second transmitting and receiving part 109, a memory 170, a CPU 180, a media controller 190 and various kinds of switches 181 such as the selecting button 104 or the push button 105 shown in Figs. 1A and 1B , and further, a recording medium 190a is connected. In this embodiment, the image blur correcting unit 200, the CPU 180, a gyro sensor 182 and a driver DR form one example of an image blur correcting device of the present invention. The image blur correcting device, the input controller 130, the image signal processing part 140, the video encoder 150, the image display device 160, the liquid crystal panel 101, the media controller 190 and the recording medium 190a form one example of an imaging device of the present invention.

The CPU 180 transmits an instruction of a process to various kinds of elements of the portable telephone shown in Fig. 2 to control the various kinds of elements. For instance, under a state that an imaging mode for carrying out the imaging operation is set, when the selecting button 104 shown in Figs. 1A and 1B is pressed down, an instruction is given to a CCD 112 provided in the image blur correcting unit 200 from the CPU 180, and an instruction is given to drivers DR1 and DR2 so as to swing a holding module (described below) provided in the image blur correcting unit 200 in the direction for canceling a camera shake detected by the gyro sensor 182, so that the camera shake is corrected and the imaging operation is carried out. The structure of the image blur correcting unit 200 will be described below in detail.

When the selecting button 104 shown in Fig. 1A is pressed down, the CPU 180 sets an electronic shutter to the CCD 112 in the image blur correcting unit 200 to start an imaging process.

At this time, the direction of the camera shake or the hand vibration arising when the selecting button 104 is pressed down is detected by the gyro sensor 182 to inform the CPU 180 of the detected result. The CPU 180 receives the detected result of the gyro sensor 182 to inform the drivers DR1 and DR2 of a correcting direction. The drivers DR1 and DR2 drive coils (described below) in the image blur correcting unit to swing the holding module (described below) in the image blur correcting unit in accordance with a blur and to carry out the imaging process. In such a way, the camera shake arising when the selecting button 104 is pushed is corrected so that the light of an object to be imaged forms an image on the CCD 112 without a blur.

Then, the CCD 112 receives the light of the object to be imaged passing through the imaging lens 100a during the exposure time of the electronic shutter to read an image of the object to be imaged based on the light of the object to be imaged as a signal of the object to be imaged of an analog signal. The signal of the object to be imaged generated in the CCD 112 is converted to digital imaged image data in the A/D converting part 113. The converted imaged image data is transmitted to the image signal processing part 140 through the input controller 130.

In the image signal processing part 140, an image process such as an adjustment of an RGB level, a gamma adjustment or the like is applied to the image data. Further, the image data after the image process undergoes a compressing process. The compressed image data is temporarily supplied to the memory 170.

The memory 170 includes an SDRAM in which a program executed in the portable telephone 100 is stored and that is used as an intermediate buffer and high in its recording speed, an SRAM as a data storing memory in which data for various kinds of menu screens or the contents of a setting of the user are stored and a VRAM in which the compressed image data is stored. The VRAM is divided into a plurality of areas and the image data is stored in order in the plurality of areas. The stored image data is sequentially read by the video encoder 150 or the media controller 190. The video encoder 150 obtains the compressed image data from the memory 170 in accordance with an instruction from the CPU 180 to convert the compressed image data into a data form that can be displayed on the liquid crystal panel 101. The converted image data is supplied to the image display device 160 and an image represented by the image data is displayed on the liquid crystal panel 101 by the image display device 160. The media controller 190 serves to record the compressed image data stored in the memory 170 in the recording medium 190a or read the image data recorded in the recording medium 190a.

Further, when the telephone number is inputted by using the push button 105 shown in Fig. 1A and the determining button 107 is pushed, the telephone number is set so that a communication with a partner device is started. At this time, communication information such as the telephone number of the portable telephone 100 or the inputted telephone number is transmitted to the first transmitting and receiving part 103 from the CPU 180. The communication information is converted into a radio wave and transmitted to the antenna 103a and the radio wave is emitted from the antenna 103a. The radio wave emitted form the first antenna 103a is transmitted to the exchange office through common antennas (not shown in the drawing) respectively provided in the places of buildings or electric poles to establish a connection to the partner device to which the designated telephone number is allocated in the exchange office.

When the connection to the partner device is established, voice emitted to the portable telephone 100 by the user is collected by the microphone 121. The collected voice is converted into a radio wave showing audio data by the interface part 120 and transmitted to the partner device by the first antenna 103a of the first transmitting and receiving part 103. The radio wave for an audio received through the first antenna 103a is converted into the audio data in the interface part 120 and emitted from the speaker 122 as the audio. In the first transmitting and receiving part 103 and the first antenna 103a, not only the audio data, but mail data showing a mail is transmitted and received by using a mail address. The mail data received in the first antenna 103a and digitized in the first transmitting and receiving part 103 is stored in the memory 170 by the input controller 130.

Further, in the portable telephone 100, a radio communication interface (the second transmitting and receiving part 109, the second antenna 109a) is also provided for communicating by a radio communication for a short distance without using the exchange office as well as a communication interface (the first transmitting and receiving part 103, the first antenna 103a) for communicating with the partner device such as other portable telephone through the exchange office. As the communication interface for the radio communication for the short distance, an infrared communication, a Bluetooth or the like can be applied. In this embodiment, the infrared communication is applied as the communication interface. When an infrared ray directly transmitted from other portable telephone is received by the second antenna 109a, an electric signal based on the received infrared ray is picked up by the second transmitting and receiving part 109 and converted to digital data. Conversely, when data is transmitted to an external device, the data is transmitted to the second transmitting and receiving part 109, the data is converted to a radio wave in the second transmitting and receiving part 109 and the radio wave is emitted from the second antenna 109a.

When the infrared ray showing an image is received by the second antenna 109a, an electric signal based on the infrared ray is converted to image data in the second transmitting and receiving part 109. The converted image data is transmitted to the image display device 160 to display the image represented by the image data on the liquid crystal panel 101 or recorded on the recording medium 190a through the media controller 190 like the imaged image data.

The portable telephone 100 is basically formed as described above.

Subsequently, the structure of the image blur correcting unit 200 forming a part of the imaging device included in the portable telephone 100 will be described in detail.

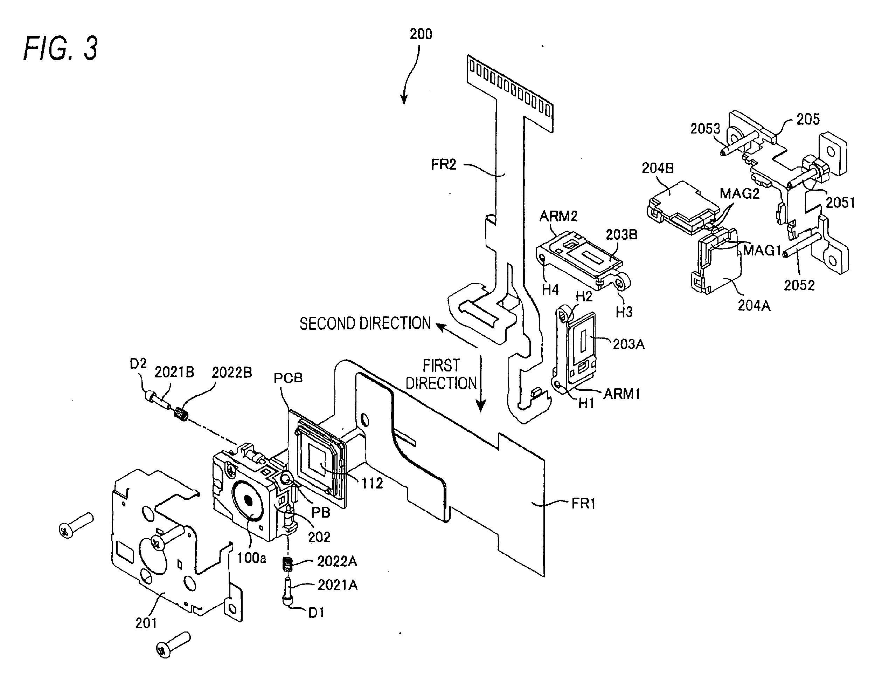

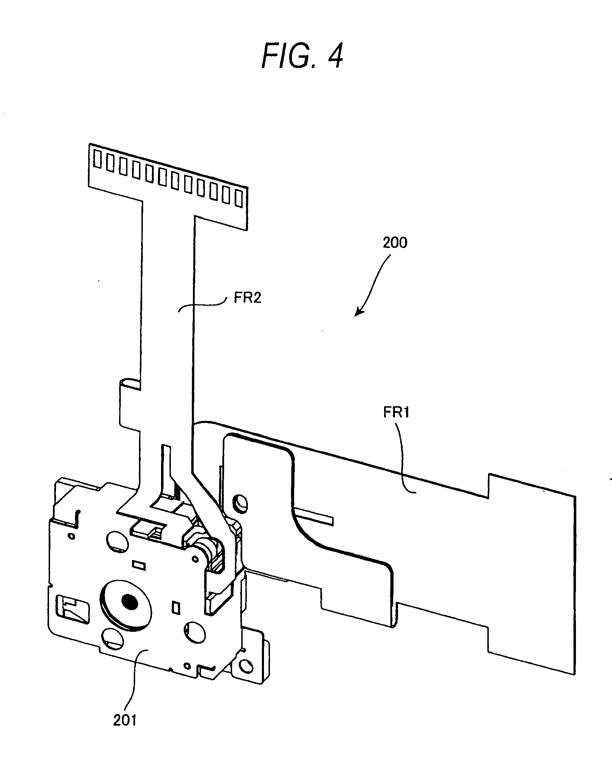

Fig. 3 is an exploded perspective view of the image blur correcting unit. Further, Fig. 4 shows the image blur correcting unit 200 after members shown in the exploded perspective view in Fig. 3 are respectively incorporated.

In Figs. 3 and 4, a left lower part corresponds to a side of the object to be imaged.

In Fig. 3, are respectively shown in order under exploded states from the side of the object to be imaged in the left lower part, a cover 201, a holding module 202, a flexible board FR1 for transferring an image signal, a flexible board FR2 for supplying an electric current to coils respectively formed on both a board 203A extending in a first direction in Fig. 3 and a board 203B extending in a second direction in Fig. 3, a pair of arms ARM1 and ARM2 for respectively holding the board 203A and 203B on which the coils are formed, U-shaped yokes 204A and 204B for holding magnets MAG1 and MAG2 on which N poles and S poles are arranged so as to be opposed to the coils respectively formed on the boards 203A and 203B and a support member 205 for supporting the two arms so as to respectively freely move and having surfaces respectively extending in the first direction and the second direction on which the two yokes 204A and 204B are fixed. When these members are assembled, a form shown in Fig. 4 is obtained.

Initially, referring to Fig. 3, the structure will be described.

In a rightmost part of Fig. 3, a dog-leg shaped support member 205 is shown for supporting two driving mechanisms to swing the holding module 202. The support member 205 supports the two driving mechanisms for swinging the holding module and supports the holding module so as to freely swing.

In this support member 205, guide members 2051, 2052 and 2053 are provided at three parts that are respectively inserted into hole parts H1, H2 and H3 and H4 provided at both end parts of the two arms ARM1 and ARM2. The guide members 2051 to 2053 are respectively provided at top parts of the dog-leg shaped support member 205. To the central guide member 2051, the hole H2 and the hole H3 of the holes at both the end parts of the arms ARM1 and ARM2 are commonly fitted.

That is, one arm ARM1 of the two arms is inserted to the guide member 2051 at the central top of the dog-leg shape of the support member 205 and to the guide member 2052 at the top of one end side of the dog-leg shape. The other arm ARM2 is inserted to the guide member 2051 at the central top of the dog-leg shape and to the guide member 2053 at the top of the other end side of the dog-leg shape. Though not shown in the drawing, in the one end sides (having the hole H1 and the hole H4) of the arms ARM1 and ARM2 located in the holding module side, recessed parts engaging with spherical protruding parts of the holding module side are respectively provided. Further, in the holding module side of the central part of the dog-leg shape of the support member 205, a support part for holding the holding module 202 is provided and a recessed part is provided in the support part.

Further, to a surface of the support member 205 extending in the first direction shown in Fig. 3 and a surface extending in the second direction by placing the central top of the dog-leg shape of the support member 205 at a center, the U shaped yokes 204A and 204B are respectively stuck and fixed. Since the U shaped yokes 204A and 204B are arranged so as to direct openings to the boards 203A and 203B in which the coils are formed, the yokes are arranged so that the boards 203A and 203B are accommodated respectively from the opening sides in parallel with the magnets MAG1 and MAG2. To the boards 203A and 203B respectively, the flexible board FR2 is connected for supplying an electric current to the coils on the boards. On the boards 203A and 203B on which the coils are formed, Hall elements are provided to detect the position of the holding module 202 swinging in accordance with the movements of the arms ARM1 and ARM2.

As described above, since in the holding module 202 side of the central top part of the dog-leg shaped support member 205, the recessed part serving as the support part is provided that is engaged with the spherical protruding part of the holding module 202 to support the holding module 202, when the protruding part PB of the holding module 202 is engaged with the recessed part and the spherical recessed parts respectively provided in the two arms ARM1 and ARM2 supported by the support member 205 so as to freely move are engaged with the protruding part of a first driving point D1 and the protruding part of a second driving point D2 of the holding module 202, the holding module 202 is supported by the support member 205 so as to freely swing as shown in Fig. 4.

In this embodiment, the support member 205, the arm ARM1, the board 203A on which the coil is formed and the yoke 204A to which the magnet MAG1 is stuck form one example of a first driving mechanism in the present invention. The support member 205, the arm ARM2, the board 203B on which the coil is formed and the yoke 204B to which the magnet MAG2 is stuck form one example of a second driving mechanism in the present invention. The first driving mechanism rotates the holding module 202 on a first axis connecting the axis point PB to the second driving point D2 through the first driving point D1, and the second driving mechanism rotates the holding module 202 on an a second axis connecting the axis point PB to the first driving point D1 through the second driving point D2 to swing the holding module.

In Fig. 3, to show the first driving point D1 and the second driving point D2, rod shaped members 2021A and 2021B having spherical protruding parts and springs 2022a and 2022B inserted to the rod shaped members 2021 are respectively shown. The springs 2022A and 2022B are members having functions for allowing the two arms ARM1 and ARM2 not to move when an electric current is not supplied to the coils. The springs 2022A and 2022B have functions for resiliently urging the protruding parts (the first driving point D1, the second driving point D2) to press to the recessed parts of the arm side when the electric current is not supplied to the coils to allow the arms to stand still at positions where the arms are located when the supply of the electric current is cut off after the supply of the electric current to the coils is stopped.

Further, in this embodiment, since a structure is shown that not only the lens, but also the CCD 112 is held by the holding module 202, the flexible board FR1 for transferring the image signal is connected to the swinging holding module 202. The flexible board FR1 has one end connected to a sensor board PCB on which the CCD 112 is mounted. The flexible board FR1 is connected to the sensor board PCB in such a way that a part which at least firstly extends from the sensor board extends outward from the holding module 202 obliquely with respect to both the first direction connecting the axis point PB to the first driving point D1 and the second direction connecting the axis point PB to the second driving point D2. In such a way, an oscillation or a swinging movement is slightly transmitted to the flexible board.

The explanation of the image blur correcting unit 200 described above has substantially the same contents as those of the explanation of the structure proposed in Japanese Patent Application No. 2007-035341.

Here, in this embodiment, the structure and operation of the newly added cover 201 will be described in addition to the structure of Japanese Patent Application No. 2007-035341.

As described above, it was tried to make the image blur correcting unit compact as in the above-mentioned Japanese applications, such as Japanese Patent Application No. 2006-269712, Japanese Patent Application No. 2006-269713, JapanesepatentApplicationNo. 2006-269714, Japanese Patent Application No.. 2006-269715 and Japanese Patent Application No. 2007-035341. However, as described in the problem, since the holding module is exposed to the surface in the usual image blur correcting unit, the swing part of the holding module 202 excessively swing depending on an attaching state or the state of occurrence of a hand vibration so that the holding module may possibly come into contact with the body in the portable telephone 100 to damage the inner wall of the body. Further, a problem arises that the swing part frequently comes into contact with the inner wall of the body to break the image blur correcting unit itself.

Thus, for solving this problem, in this embodiment, the cover 201 for covering the entire part of the holding module 202 is newly provided to regulate the oscillation or the swing movement of the swing part. Thus, the swing part can be inhibited from coming into contact with the inner wall of the body of the portable device by using the cover 201 as a shield and the dimension of the cover 201 can be presented to persons who assemble the portable telephone as the outline dimension of the image blur correcting unit.

Further, in this embodiment, contrivances are made that cushioning members are provided in the parts of the cover 201 with which the holding module 202 may possibly come into contact due to the oscillation or the swinging movement of the holding module 202 and the cover 201 itself has an electromagnetic shield function (for instance, a material having a shield function is used or a technique for forming metal on a surface such as a deposition or sputtering is employed) so that the cover can be multi-functionally used.

In such a structure, after the image blur correcting unit 200 of this embodiment is incorporated in the body of the portable telephone 100, not only the contact of the image blur correcting unit with the inner wall of the body of the portable telephone, but also the contact with the cover is inhibited to ensure an assured operation of the image blur correcting unit. Further, even when the oscillation or the swinging movement of the holding module is increased due to a dropping shock so that the holding module comes into contact with the cover, a state that the holding module comes into contact with the cover is mitigated by the cushioning member to prevent the image blur correcting unit from being broken.

Further, usually, when the antenna is mounted in the neighborhood, since there is a fear that an electromagnetic interference occurs in the vicinity of the antenna, the image blur correcting unit cannot be disposed. However, in the image blur correcting unit 200 of this embodiment, since the cover 201 is multi-functionally utilized and has the electromagnetic shield function, the image blur correcting unit can be effectively mounted even in the vicinity of the antenna.

In the above-described embodiment, an example is described that employs what is called a voice coil motor type using the coil and the magnet for the driving mechanism. However, the present invention is not limited thereto and the driving mechanism may be a type using for instance, a piezoelectric element to drive the holding module.

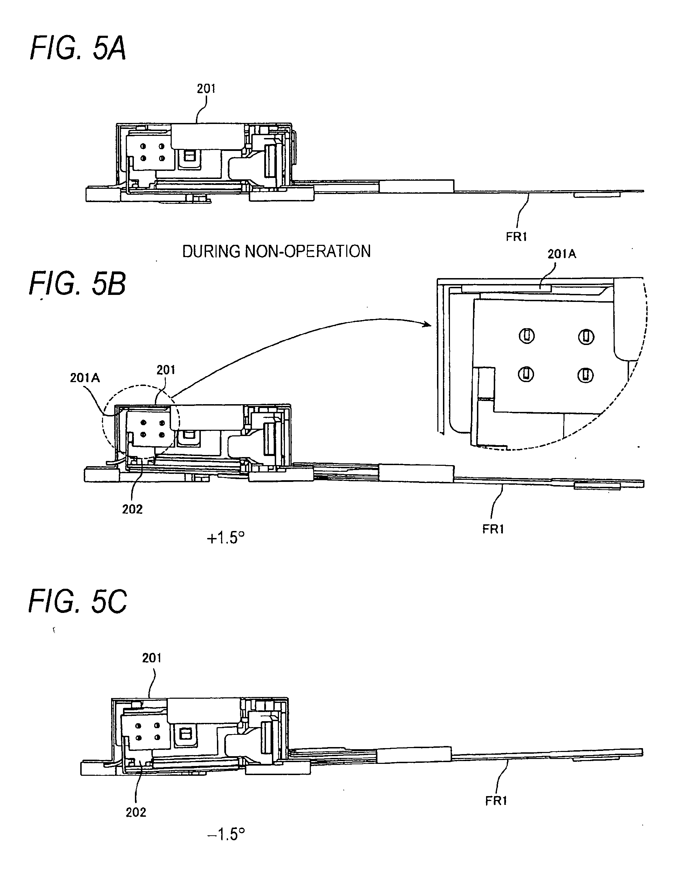

Finally, an operation of the image blur correcting unit 200 will be described by referring to Figs. 5A to 5C.

Figs. 5A to 5C are diagrams for explaining the operation of the image blur correcting unit.

Figs. 5A to 5C are diagrams showing the image blur correcting unit viewed from a transverse direction.

Fig. 5A shows a state that the holding module 202 provided in the image blur correcting unit 200 maintains a substantially parallel position to the bottom surface of the support member 205. Fig. 5B and Fig. 5C respectively show the positions of the holding module 202 when the swing part of the holding module swings at a maximum angle (± 1.5 °).

When the holding module swings by + 1.5 ° from the state shown in Fig. 5A, the position shown in Fig. 5B is obtained. When the holding module swings by - 1.5 ° from the state shown in Fig. 5A, the position shown in Fig. 5C is obtained.

Fig. 5B shows that even when the swing part swings by + 1.5 ° or more due to the dropping shock or the like to come into contact with the cover, the cushioning member 201A is provided for mitigating a shock of the contact with the cover due to the oscillation or the swing movement. Further, Fig. 5C shows that when the holding module swings by - 1.5 °, the swing part is substantially flush with the bottom surface of the support member 205 of the image blur correcting unit.

According to such a structure, when the image blur correcting unit is located within an outline dimension defined by the cover 201, an assured operation thereof is ensured. Further, the swing part is prevented from being broken by the cushioning member 201A.

In the above-described embodiment, the example that the image blur correcting device is applied to the portable telephone is shown. However, it is to be understood that the image blur correcting device may be mounted on other optical devices such as a projector or a copying machine in which an optical system is incorporated as well as the imaging device. Further, an expansible member is not limited to the above-described spring and other expansible members may be employed.

As described above, it can be realized to provide an image blur correcting unit that does not damage an inner wall of the body of a portable device and assuredly operates even when the image blur correcting unit is mounted in the body of a compact and thin portable device, an image blur correcting device having the image blur correcting unit, an imaging device having the image blur correcting device and the portable device having the imaging device.

The entire disclosure of each and every foreign patent application from which the benefit of foreign priority has been claimed in the present application is incorporated herein by reference, as if fully set forth.

## Claims

1. An image blur correcting unit comprising:
a holding module that holds a lens;
a driving mechanism that drives the holding module so as to correct blur of an image formed by catching light of an object to be imaged arriving via the lens;
a cover that covers the holding module and the driving mechanism to define an outline of the image blur correcting unit.

2. An image blur correcting unit according to claim 1, further comprising
a support member that supports the holding module so as to freely swing in a universal direction on an axis point as one point on an outer periphery of the holding module,
wherein the driving mechanism comprises first and second driving mechanisms that drive the holding module respectively through a first driving point and a second driving point separated in a first direction and a second direction different from each other from the axis point on the outer periphery of the holding module, in which the first driving mechanism rotates, through the first driving point, the holding module on a first axis connecting the axis point to the second driving point, and the second driving mechanism rotates, through the second driving point, the holding module on a second axis connecting the axis point to the first driving point,
wherein the cover covers the holding module and the first and second driving mechanisms, and further covers the support member to define the outline of the image blur correcting unit.

3. An image blur correcting unit according to claim 1,
wherein the cover is provided with a cushioning member that mitigates a shock caused by contact of the holding module with the cover due to swing of the holding module.

4. An image blur correcting unit according to claim 1,
wherein the cover has an electromagnetic shield function.

5. An image blur correcting unit according to claim 2,
wherein the first driving mechanism comprises:
a first arm that supports the first driving point so as to freely rotate;
a first coil that is held by the first arm and receives action of a magnetic force and supply of an electric current to generate a driving force in a direction of an optical axis and to allow the first arm to drive the first driving point in the direction of the optical axis;
a first magnet that is held by the support member to exert the magnetic force on the first coil and expands horizontally relative to the optical axis; and
a first guide member that is fixed to the support member and guides the first arm so that a first working point of the first arm for applying the driving force to the first driving point moves in the direction of the optical axis, and
the second driving mechanism comprises:
a second arm that supports the second driving point so as to freely rotate;
a second coil that is held by the second arm and receives action of a magnetic force and supply of an electric current to generate a driving force in a direction of an optical axis and to allow the second arm to drive the second driving point in the direction of the optical axis;
a second magnet that is held by the support member to exert the magnetic force on the second coil and expands horizontally relative to the optical axis; and
a second guide member that is fixed to the support member and guides the second arm so that a second working point of the second arm for applying the driving force to the second driving point moves in the direction of the optical axis.

6. An image blur correcting unit according to claim 5, further comprising:
a first sensor that is supported by the first arm to detect change of the magnetic force received from the first magnet due to movement of the first arm in the direction of the optical axis when the first arm drives the first driving point; and
a second sensor that is supported by the second arm to detect change of the magnetic force received from the second magnet due to movement of the second arm in the direction of the optical axis when the second arm drives the second driving point.

7. An image blur correcting unit according to claim 1,
wherein the holding module further holds an image sensor that catches the light of the object to be imaged to generate an image signal.

8. An image blur correcting unit according to claim 2,
wherein the first driving point and the second driving point are respectively formed at positions where a line segment connecting the first driving point to the axis point intersects with each other a line segment connecting the second driving point to the axis point substantially at an angle of 90 °.

9. An image blur correcting unit according to claim 2,
wherein the holding module comprises a spherical protruding part in the axis point, and
the support member comprises in its support part a spherical recessed surface that receives the protruding part.

10. An image blur correcting unit according to claim 5,
wherein the holding module comprises spherical protruding parts respectively in the first driving point and the second driving point, and
the first arm and the second arm comprise in the first working point and the second working point respectively spherical recessed parts that receive the protruding parts respectively provided in the first driving point and the second driving point so that the first arm and the second arm apply the driving force to the protruding parts respectively through the recessed parts.

11. An image blur correcting device comprising:
the image blur correcting unit according to claim 1;
a shake detecting part that detects a blur; and
a shake control part that allows the first and second driving mechanisms to rotate and drive the holding module in accordance with the detected result of the shake detecting part.

12. An imaging device comprising the image blur correcting device according to claim 11,
wherein the holding module further holds the image sensor that catches an image to be imaged to generate an image signal in which a blur is reduced by operation of the image blur correcting device.

13. A portable device comprising the imaging device according to claim 12.
